# EUROPEAN PATENT APPLICATION

(11) **EP 4 783 020 A1**
(43) Date of publication of application: **29.07.2026**
(21) Application number: 24866847.7
(22) Date of filing: 29.04.2024
(51) Int. Cl.: G06F 16/16

(54) **FILE CREATION METHOD, DATA ACCESS DEVICE, STORAGE DEVICE, AND SYSTEM**

(30) Priority: 21.09.2023 CN 202311228731
(71) Applicant: Huawei Technologies Co., Ltd., Shenzhen, Guangdong 518129 (CN)
(72) Inventor: LI, Sheng, Shenzhen, Guangdong 518129 (CN); LI, Zheng, Shenzhen, Guangdong 518129 (CN); GAO, Yuan, Shenzhen, Guangdong 518129 (CN)
(74) Representative: Isarpatent
(86) International application number: PCT/CN2024/090666
(87) International publication number: WO 2025/060423

(57) **Abstract**

A file creation method, a data access device, a storage device, and a system are disclosed, and relate to the field of data storage technologies, to resolve a problem of time-consuming and inefficient file creation because file creation of a large amount of data consumes computing power of the storage device. A data identifier query process is offloaded from the storage device to the data access device (for example, a user end or a smart network interface card), so that the data identifier query process does not consume much computing power of the storage device. This helps reduce data query duration in a file creation process, to improve efficiency of file creation.

## Description

This application claims priority to Chinese Patent Application No. 202311228731.7, filed with the China National Intellectual Property Administration on September 21, 2023 and entitled "FILE CREATION METHOD, DATA ACCESS DEVICE, STORAGE DEVICE, AND SYSTEM", which is incorporated herein by reference in its entirety.

### TECHNICAL FIELD

This application relates to the field of data storage technologies, and in particular, to a file creation method, a data access device, a storage device, and a system.

### BACKGROUND

With continuous development of cloud computing technologies, an amount of unstructured data increases, and efficient management on the unstructured data becomes increasingly important. The unstructured data is data with an irregular or incomplete data structure, for example, multimedia data or a non-standardized report. Generally, when a user end needs to store the unstructured data in a storage device in a form of a file, the storage device first determines whether files with a same name exist in a stored file directory. The storage device creates a corresponding file only when files with the same name do not exist in the directory, to implement data storage. However, when the storage device needs to store a large amount of unstructured data, because the storage device has limited computing power, it takes long time for the storage device to query for a file name, and efficiency of file creation is low.

### SUMMARY

This application provides a file creation method, a data access device, a storage device, and a system, to resolve a problem of time-consuming and inefficient file creation because file creation of a large amount of data consumes computing power of the storage device.

According to a first aspect, this application provides a file creation method. The file creation method is performed by a data access device. The method includes: The data access device obtains a file creation request, where the file creation request indicates to write to-be-processed data into a storage device, and the file creation request carries an identifier of the to-be-processed data. Then, the data access device determines whether the identifier of the to-be-processed data is stored in an identifier index cached in the data access device, where the identifier index includes an identifier of data that has been stored in the storage device. If the identifier of the to-be-processed data is not stored in the identifier index, the data access device sends a data write instruction to the storage device. The data write instruction carries the to-be-processed data, and the data write instruction instructs the storage device to create a file including the to-be-processed data.

In this application, the data access device caches the identifier index, and the identifier index includes the identifier of the data that has been stored in the storage device. In a file creation process, the data access device may query, based on the identifier index, whether the identifier of the data is stored in the storage device. A data identifier query process is offloaded from the storage device in common practice to the data access device, in other words, the data access device provides computing power required in the data identifier query process, so that the data identifier query process does not consume much computing power of the storage device. This helps reduce data query duration in the file creation process, to improve efficiency of file creation.

In an optional implementation, the data access device includes either or both of a user end and a smart network interface card that communicate with the storage device.

For example, the data access device includes the user end. The user end may be a client (client) that accesses the storage device, for example, a mobile phone, a computer, a tablet computer, or a server.

For another example, the data access device includes the smart network interface card. The smart network interface card (smart network interface Card, Smart NIC or SNIC) is a flexible and programmable network interface card that is used together with a server.

For still another example, the data access device includes the user end and the smart network interface card.

In an optional implementation, the storage device includes a plurality of storage areas, and identifiers of data stored in different storage areas are different. The data access device further caches a partition index, where the partition index includes an index value range corresponding to each of the plurality of storage areas. Before the data access device determines a storage status of the identifier of the to-be-processed data based on the identifier index cached in the data access device, the file creation method provided in this application further includes: The data access device processes the identifier of the to-be-processed data based on a specified algorithm to obtain an index value corresponding to the identifier of the to-be-processed data, where the specified algorithm includes one or a combination of a hash algorithm and a model-based key-value mapping algorithm. In addition, the data access device queries the partition index based on the index value, determines a target storage area that is in the plurality of storage areas and that matches the to-be-processed data, and sends an index obtaining request to the storage device, where the index obtaining request indicates the storage device to send, to the data access device, an identifier of data that has been stored in the target storage area. The data access device receives the identifier index sent by the storage device based on the index obtaining request, where the identifier index includes the identifier of the data that has been stored in the target storage area.

In this application, the data access device may only need to cache an identifier index of one or a few storage areas in the storage device, so that a data transmission delay of the identifier index between the data access device and the storage device is low, and storage space that needs to be occupied by the identifier index in the data access device is small. This helps further reduce data query duration in a file creation process, to improve efficiency of file creation.

In an optional implementation, the data write instruction further carries a target address of the to-be-processed data, and the target storage area includes storage space corresponding to the target address.

In an optional implementation, the file creation method provided in this application further includes: The data access device receives index update information sent by the storage device, and updates the partition index based on the index update information. The index update information indicates a change status of the partition index.

For example, the data access device may send an index update request to the storage device, and receive the foregoing index update information.

For another example, the storage device may periodically send the index update information to the data access device, so that the data access device updates the partition index.

In this application, the data access device may update the partition index based on a change status of the plurality of storage areas in the storage device, so that the data access device can obtain the identifier index based on a latest partition index in a file creation query process. This avoids a problem that the storage device creates a duplicate file because the storage device has stored data with a same identifier, and improves accuracy of file creation.

According to a second aspect, this application provides a file creation method. The file creation method is performed by a storage device. The file creation method includes: The storage device receives an index obtaining request sent by a data access device, where the index obtaining request carries an address of a first storage area to be requested, and the first storage area is one of a plurality of storage areas included in the storage device. The storage device sends an identifier index of the first storage area to the data access device in response to the index obtaining request, where the identifier index of the first storage area includes an identifier of data that has been stored in the first storage area. The storage device receives a data write instruction sent by the data access device, where the data write instruction carries to-be-processed data. The storage device creates, in response to the data write instruction, a file including the to-be-processed data.

In this application, the storage device sends an identifier index of the one or more storage areas to the data access device. Then, in a file creation process, the data access device may query, based on the identifier index, whether the identifier of the data is stored in the storage device. A data identifier query process is offloaded from the storage device in common practice to the data access device, in other words, the data access device provides computing power required in the data identifier query process, so that the data identifier query process does not consume much computing power of the storage device. The storage device only needs to create, based on the data write instruction that is sent by the data access device and that carries the to-be-processed data, a file including the to-be-processed data. This helps reduce data query duration in the file creation process, to improve efficiency of file creation.

In an optional implementation, the data write instruction further carries a target address of the to-be-processed data, and the first storage area includes storage space corresponding to the target address. That the storage device creates, in response to the data write instruction, the file including the to-be-processed data includes: The storage device creates, in the first storage area, the file including the to-be-processed data.

In an optional implementation, each of the plurality of storage areas corresponds to one segment of consecutive address space included in one leaf node of a tree storage structure in the storage device.

In an optional implementation, before that the storage device receives the index obtaining request sent by the data access device, the file creation method provided in this application further includes: The storage device sends a partition index to the data access device, where the partition index includes an index value range corresponding to each of the plurality of storage areas, and different index values in the index value range correspond to identifiers of different data. Based on this, only after receiving a to-be-accessed storage area determined by the data access device based on the partition index, the storage device sends an identifier index of the storage area to the data access device. In this way, the data access device only needs to cache an identifier index of one or a few storage areas in the storage device, so that a data transmission delay of the identifier index between the data access device and the storage device is low, and storage space that needs to be occupied by the identifier index in the data access device is small. This helps further reduce data query duration in a file creation process, to improve efficiency of file creation.

According to a third aspect, this application provides a data access device. The data access device includes a transceiver and a processor. The transceiver is configured to obtain a file creation request, where the file creation request indicates to write to-be-processed data into a storage device, and the file creation request carries an identifier of the to-be-processed data. The processor is configured to determine whether the identifier of the to-be-processed data is stored in an identifier index cached in the data access device, where the identifier index includes an identifier of data that has been stored in the storage device. If the identifier of the to-be-processed data is not stored in the identifier index, the transceiver is further configured to send a data write instruction to the storage device, where the data write instruction carries the to-be-processed data, and the data write instruction instructs the storage device to create a file including the to-be-processed data.

In an optional implementation, the data access device includes either or both of a user end and a smart network interface card.

According to a fourth aspect, this application provides a storage device. The storage device includes: a memory, configured to provide a plurality of storage areas; and a processor, configured to: receive an index obtaining request sent by a data access device, where the index obtaining request carries an address of a first storage area to be requested, and the first storage area is one of the plurality of storage areas included in the storage device; and perform, based on the index obtaining request, operation steps of the method according to any one of the optional implementations of the second aspect.

According to a fifth aspect, this application provides a data access system. The data access system includes: one or more storage devices provided in the fourth aspect, configured to store data; and one or more data access devices provided in any one of the optional implementations of the third aspect, configured to access the storage device.

According to a sixth aspect, this application provides a computer-readable storage medium. The computer-readable storage medium stores computer software instructions. When the computer software instructions are run on a computer, the computer performs operation steps of the method according to any one of the optional implementations of the first aspect or the second aspect.

According to a seventh aspect, this application provides a computer program product. When the computer program product runs on a computer, the computer performs operation steps of the method according to any one of the optional implementations of the first aspect or the second aspect.

According to an eighth aspect, this application provides a chip system. The chip system includes a processor, configured to implement a function of the data access device or the storage device in the method according to the first aspect or the second aspect. In a possible design, the chip system further includes a memory, configured to store program instructions and/or data. The chip system may include a chip, or may include a chip and another discrete component.

For beneficial effects of the third aspect to the eighth aspect, refer to the descriptions of any one of the optional implementations of the first aspect or the second aspect. Details are not described herein again. In this application, based on the implementations according to the foregoing aspects, the implementations may be further combined to provide more implementations.

### BRIEF DESCRIPTION OF DRAWINGS

FIG. 1 is a diagram of a structure of a data access system according to this application;
FIG. 2 is a diagram of a structure and an organization of a file storage system according to this application;
FIG. 3 is a schematic flowchart 1 of a file creation method according to this application;
FIG. 4 is a schematic flowchart 2 of a file creation method according to this application;
FIG. 5 is a schematic flowchart 3 of a file creation method according to this application;
FIG. 6 is a diagram of two types of index update according to this application;
FIG. 7 is a schematic flowchart 4 of a file creation method according to this application; and
FIG. 8 is a diagram of a structure of a data access device according to this application.

### DESCRIPTION OF EMBODIMENTS

This application provides a file creation method. A data identifier query process is offloaded from a storage device to a data access device (for example, a user end or a smart network interface card), so that the data identifier query process does not consume much computing power of the storage device. This helps reduce data query duration in a file creation process, to improve efficiency of file creation.

Specifically, the data access device caches an identifier index, and the identifier index includes an identifier of data that has been stored in the storage device. In the file creation process, the data access device may query, based on the identifier index, whether the identifier of the data is stored in the storage device. The data identifier query process is offloaded from the storage device in common practice to the data access device, in other words, the data access device provides computing power required in the data identifier query process, so that the data identifier query process does not consume much computing power of the storage device. This helps reduce the data query duration in the file creation process, to improve the efficiency of file creation.

The technical solutions in this application may not only be applied to a current data access device or storage device, but also be applied to a future data access device and storage device, or a storage system including the foregoing data access device or storage device. Terms used in embodiments of this application are only used to explain specific embodiments of this application, but are not intended to limit this application. The following first briefly describes some concepts that may be used in this application.

A key-value pair (Key-Value pair, KV) is a data storage structure, and includes a key (key) and a value (value) corresponding to the key.

An index node (index node, inode) is used to record meta information of a file, for example, an inode number, a file size, access permission, creation time, modification time, and a location of data in a disk. The index node is a unique identifier of the file. The index node and the file are in one-to-one correspondence and are also stored in a hard disk. Therefore, the index node also occupies disk space.

A directory entry (directory entry, dentry) is used to record a file name, an index node pointer, and a hierarchical association relationship with another directory entry. A plurality of directory entries are associated to form a directory structure. However, a difference between the directory entry and the index node lies in that the directory entry is a data structure maintained by a kernel, and is not stored in the disk, but is cached in an internal memory.

For clear and brief description of the following embodiments, a related technology is briefly described first.

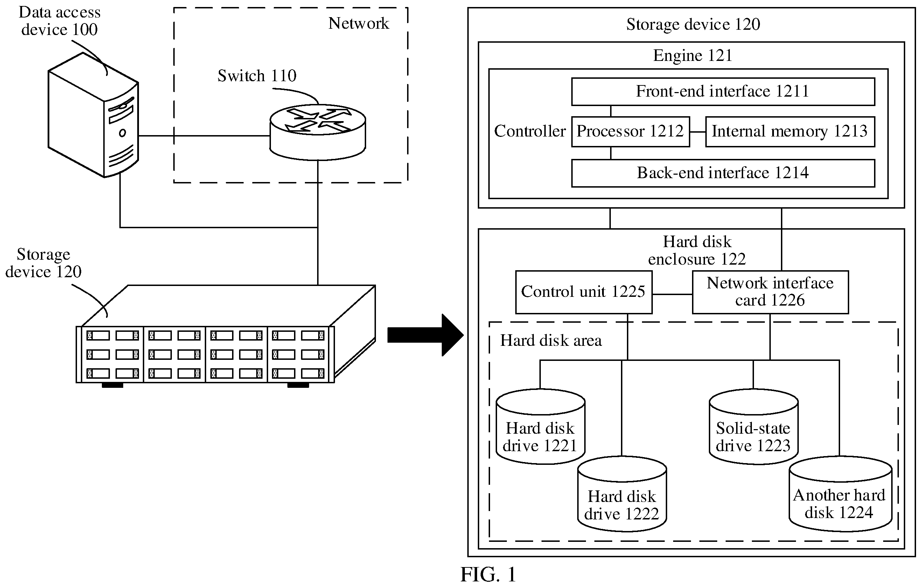

FIG. 1 is a diagram of a structure of a data access system according to this application. The data access system includes a data access device 100 and a storage device 120. In an application scenario shown in FIG. 1, a user accesses data by using application programs. A computer running these application programs may be referred to as a "computing device".

The data access device 100 may be a physical machine or a virtual machine. The physical machine may include but is not limited to either or both of a user end and a smart network interface card (smart NIC).

For example, the data access device 100 includes the user end. The user end may be a client (client), for example, a host (host), a desktop computer, a server, a notebook computer, or a mobile device.

For another example, the data access device 100 includes the smart network interface card (smart NIC). The smart network interface card is also referred to as a smart network adapter. In addition to completing a network transmission function provided by a standard network interface card, the smart network interface card further provides a built-in programmable and configurable hardware acceleration engine, to improve performance of an application, greatly reduce communication consumption of a CPU in a host connected to the smart network interface card, and provide more CPU resources for the application. For example, in a highly virtualized environment, the CPU in the host needs to run a task related to an open virtual switch (open virtual switch, OVS). In addition, the CPU in the host further needs to process operations such as storage, online or offline encryption and decryption of a data packet, deep data packet inspection, firewall, and complex routing. These operations consume a large quantity of CPU resources, and optimal service performance cannot be achieved due to CPU resource contention among different services. As a hub for connecting various services, the smart network interface card accelerates the foregoing services.

For still another example, the data access device 100 includes the user end and the smart network interface card.

In a possible example, the data access device 100 accesses the storage device 120 via a network to access data. For example, the network may include a switch 110.

In another possible example, the data access device 100 may alternatively communicate with the storage device 120 by using a wired connection, for example, through a universal serial bus (universal serial bus, USB) or a peripheral component interconnect express (Peripheral Component Interconnect Express, PCIe) bus.

The storage device 120 shown in FIG. 1 may be a centralized storage system. The centralized storage system features a unified portal, and all data from an external device passes through the portal. The portal is an engine 121 of the centralized storage system. The engine 121 is a core component of the centralized storage system, and many advanced functions of the storage system are implemented in the engine 121.

As shown in FIG. 1, the engine 121 may include one or more controllers. An example in which the engine 121 includes one controller is used for description in FIG. 1. In a possible example, if the engine 121 includes a plurality of controllers, a mirror channel may exist between any two controllers, to implement a function of mutual backup of any two controllers. This avoids unavailability of the entire storage device 120 caused by a hardware fault. It should be understood that if the engine 121 includes a plurality of controllers, the engine 121 may also be referred to as an array controller of the storage device 120.

The engine 121 further includes a front-end interface 1211 and a back-end interface 1214. The front-end interface 1211 is configured to communicate with the data access device 100, to provide a data access service for the data access device 100. The back-end interface 1214 is configured to communicate with a hard disk, to expand a capacity of the storage device 120. The engine 121 may be connected to more hard disks through the back-end interface 1214, to form a large storage resource pool.

In terms of hardware, as shown in FIG. 1, the controller includes at least a processor 1212 and an internal memory 1213. The processor 1212 is a central processing unit (central processing unit, CPU), configured to process a data access request from an outside device (a server or another storage system) of the storage device 120, and further configured to process a request generated inside the storage device 120. For example, when receiving, through the front-end interface 1211, data write requests sent by the data access device 100, the processor 1212 temporarily stores, in the internal memory 1213, data in the data write requests. When a total amount of data in the internal memory 1213 reaches a specific threshold, the processor 1212 sends, to at least one of a hard disk drive 1221, a hard disk drive 1222, a solid-state drive (solid-state drive, SSD) 1223, or another hard disk 1224 through a back-end interface, the data stored in the internal memory 1213, to perform persistent storage.

The internal memory 1213 is an internal memory that directly exchanges data with the processor. The internal memory 1213 can read and write the data at a high speed at any time, and serves as a temporary data memory of an operating system or another running program. The internal memory includes at least two types of memories. For example, the internal memory may be a random access memory, or may be a read-only memory (read-only memory, ROM). For example, the random access memory is a DRAM or an SCM. The DRAM is a semiconductor memory, and is a volatile memory (volatile memory) device like most random access memories (random access memories, RAMs). However, the DRAM and the SCM are merely examples for description in this embodiment. The internal memory may further include another random access memory, for example, a static random access memory (static random access memory, SRAM). For example, the read-only memory may be a programmable read-only memory (programmable read-only memory, PROM) or an erasable programmable read-only memory (erasable programmable read-only memory, EPROM).

In addition, the internal memory 1213 may alternatively be a dual in-line memory module (dual in-line memory module, DIMM) or a dual in-line memory module, that is, a module including a dynamic random access memory (DRAM), or may be an SSD. During actual application, a plurality of internal memories 1213 and different types of internal memories 1213 may be configured in the controller. A quantity and types of internal memories 1213 are not limited in this embodiment. In addition, the internal memory 1213 may be configured to have a power failure protection function. The power failure protection function means that the data stored in the internal memory 1213 is not lost even when a system is powered on again after a power failure. An internal memory having the power failure protection function is referred to as a non-volatile memory.

The internal memory 1213 stores a software program, and the processor 1212 may run the software program in the internal memory 1213 to manage the hard disk. For example, the hard disk is abstracted into a storage resource pool, and the storage resource pool is provided for the server in a form of a logical unit number (logical unit number, LUN) for use. The LUN herein is actually the hard disk seen on the server. Certainly, some centralized storage systems are also file servers, and may provide a file sharing service for the server.

As shown in FIG. 1, in the system, the engine 121 may not have a hard disk slot, the hard disk needs to be placed in a hard disk enclosure 122, and the back-end interface 1214 communicates with the hard disk enclosure 122. The back-end interface 1214 exists in the engine 121 in a form of an adapter, and one engine 121 may be connected to a plurality of hard disk enclosures through two or more back-end interfaces 1214. Alternatively, the adapter may be integrated in a mainboard. In this case, the adapter may communicate with the processor 1212 through the PCIe bus.

It should be noted that FIG. 1 shows only one engine 121. However, during actual application, the storage system may include two or more engines 121, and redundancy or load balancing is performed among a plurality of engines 121.

The hard disk enclosure 122 includes a control unit 1225 and several hard disks. The control unit 1225 may have a plurality of forms. In one case, the hard disk enclosure 122 is a smart disk enclosure. As shown in FIG. 1, the control unit 1225 includes a CPU and an internal memory. The CPU is configured to perform operations such as address translation and data reading and writing. The internal memory is configured to temporarily store data that is to be written into the hard disk, or data this is read from the hard disk and that is to be sent to the controller. In another case, the control unit 1225 is a programmable electronic component, for example, a data processing unit (data processing unit, DPU). The DPU has versatility and programmability of a CPU, but is more specialized, and can efficiently process a network data packet, a storage request, or an analysis request. The DPU is distinguished from the CPU by a high degree of parallelism (which requires processing a large quantity of requests). Optionally, the DPU herein may alternatively be replaced with a processing chip such as a graphics processing unit (graphics processing unit, GPU) or an embedded neural-network processing unit (neural-network processing unit, NPU). Generally, there may be one control unit 1225 or two or more control units 1225. A function of the control unit 1225 may be offloaded to a network interface card 1226. In other words, in this implementation, the hard disk enclosure 122 does not have a control unit 1225 inside, but the network interface card 1226 completes data reading and writing, address translation, and another computing function. In this case, the network interface card 1226 is a smart network interface card. The smart network interface card may include a CPU and an internal memory. The CPU is configured to perform operations such as address translation and data reading and writing. The internal memory is configured to temporarily store data that is to be written into the hard disk, or data this is read from the hard disk and that is to be sent to the controller. The network interface card may alternatively be a programmable electronic component, for example, a DPU. There is no homing relationship between the network interface card 1226 and the hard disk in the hard disk enclosure 122. The network interface card 1226 may access any hard disk (for example, the hard disk drive 1221, the hard disk drive 1222, the solid-state drive 1223, or the another hard disk 1224 shown in FIG. 1) in the hard disk enclosure 122. Therefore, hard disk expansion is convenient when storage space is insufficient.

Based on a type of a communication protocol between the engine 121 and the hard disk enclosure 122, the hard disk enclosure 122 may be a serial attached small computer system interface (serial attached small computer system interface, SAS) hard disk enclosure, may be an NVMe (Non-Volatile Memory express) hard disk enclosure, or may be another type of hard disk enclosure. The SAS hard disk enclosure uses an SAS 3.0 protocol. Each enclosure supports 25 SAS hard disks. The engine 121 is connected to the hard disk enclosure 122 through an onboard SAS interface or an SAS interface module. The NVMe hard disk enclosure is more like a complete computer system. An NVMe hard disk is inserted into the NVMe hard disk enclosure. The NVMe hard disk enclosure is then connected to the engine 121 through an RDMA port.

For example, the storage device 120 may be a storage array, for example, an all-flash storage array in which all storage media are flash memories.

In an optional implementation, the storage device 120 is a centralized storage system in which a disk and a controller are integrated. The storage device 120 does not have the foregoing hard disk enclosure 122. The engine 121 is configured to manage a plurality of hard disks connected through a hard disk slot. A function of the hard disk slot may be implemented by the back-end interface 1214.

In another optional implementation, the storage device 120 shown in FIG. 1 is a distributed storage system. The distributed storage system includes a computing device cluster and a storage device cluster. The computing device cluster includes one or more computing devices, and the computing devices may communicate with each other. The computing device may be a computing device, for example, a server, a desktop computer, or a controller of a storage array. In terms of hardware, the computing device may include a processor, an internal memory, a network interface card, and the like. The processor is a CPU, and is configured to process a data access request from an outside device of the computing device or a request generated inside the computing device. For example, when receiving data write requests sent by a user, the processor temporarily stores data in the data write requests in the internal memory. When a total amount of data in the internal memory reaches a specific threshold, the processor sends, to the storage device, the data stored in the internal memory, to perform persistent storage. In addition, the processor is further configured to perform calculation or processing on data, for example, metadata management, deduplication, data compression, virtualized storage space, and address translation. In an example, any computing device may access any storage device in the storage device cluster via a network. The storage device cluster includes a plurality of storage devices. One storage device includes one or more controllers, a network interface card, and a plurality of hard disks. The network interface card is configured to communicate with the computing device.

It should be noted that the foregoing example is merely a possible implementation of the data access system provided in this embodiment, and should not be understood as a limitation on this application. It may be understood that in the storage device 120 shown in FIG. 1, data is stored in each hard disk in a form of a file. Files stored in hard disks form a file storage system, which may be, for example, a distributed file system such as a network file system NFS (Network File System, NFS). The NFS is a distributed file system as well as a network protocol, and is used to access and share files between devices on a same local area network. For example, a NAS system may be implemented with support of an NFS protocol. The network file system is a low-cost network file sharing option that enables users and application programs to access, store, and update files on a remote computer, just like using direct-attached storage. The network file system uses a remote procedure call protocol to route requests between a client and a server. Although participating devices need to support the network file system, the devices do not need to know details of the network. It should be noted that remote procedure calls may not be secure. Therefore, the network file system should only be deployed on a trusted network behind a firewall. Although Windows supports the protocol, the protocol is mainly used in a Linux environment.

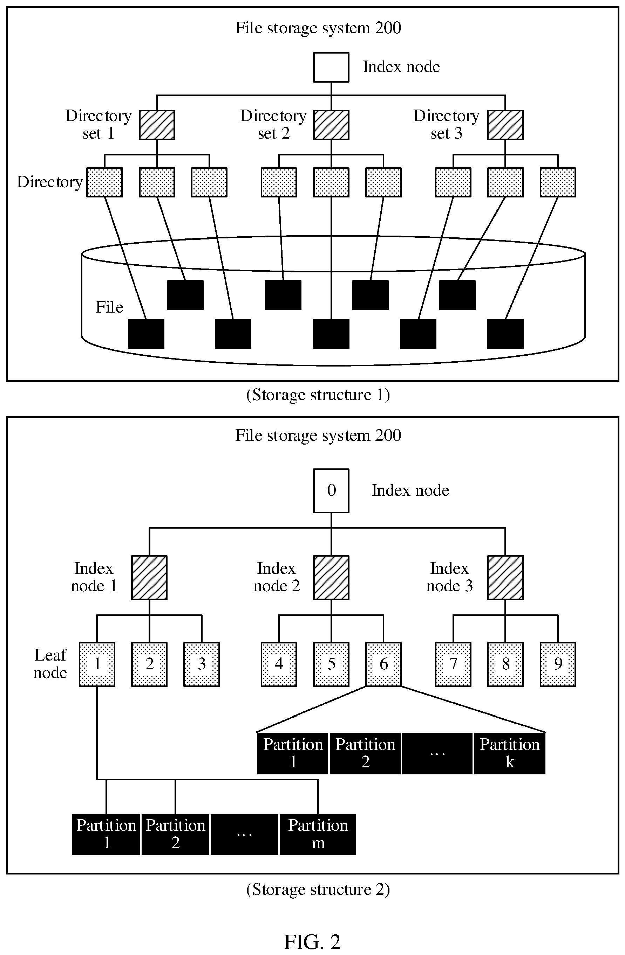

FIG. 2 is a diagram of a structure and an organization of a file storage system according to this application. For hardware implementation of the file storage system 200, refer to the related content of the storage device 120 in FIG. 1. Details are not described herein again. As shown in FIG. 2, the file storage system 200 includes one or more index nodes (nodes), and data in one index node is processed and accessed by one controller node.

The file storage system may also be referred to as a file system. The file system is in a structured data file storage and organization form. As shown in FIG. 2, one index node includes a plurality of directory sets, for example, a directory set 1, a directory set 2, and a directory set 3 shown in FIG. 2. One directory set includes one or more directories, one directory stores a plurality of files, and each file may be used to store one or more groups of data.

In a computer, all data is valued 0 or 1, and a series of 01 combinations stored on a hardware medium are completely indistinguishable and unmanageable for the computer. Therefore, the computer organizes the data by using a concept of "files". Data used for a same purpose is organized into different types of files based on structures required by different application programs. Generally, different suffixes are used to refer to different types, and the computer gives each file a name that is easy to understand and remember.

A possible storage structure is as follows. As shown in (a storage structure 1 in) FIG. 2, the computer groups these files (such as black blocks shown in FIG. 2) in a division manner, and each group of files is placed in a same directory (or referred to as a folder). In addition to files, a directory may further include a lower-level directory (which is referred to as a subdirectory or a subfolder). All the files and directories form a tree structure. The tree structure has a dedicated name: file system (File System). There are many types of file systems. Common file systems are FAT/FAT32/NTFS in Windows, and EXT2/EXT3/EXT4/XFS/BtrFS in Linux. To facilitate searching, directory levels are traversed downwards from a root node to a file, names of a directory, a subdirectory, and the file are combined with special characters (for example, "\" is used in Windows/DOS and "/" is used in a Unix-like system), and such a string of characters is referred to as a file path, for example, "/etc/systemd/system.conf" in Linux or "C:\Windows\System32\taskmgr.exe" in Windows. A path is a unique identifier for accessing a specific file. For example, D:\data\file.exe in Windows is a path of a file, and indicates a file.exe file in a data directory in a partition D.

The file system is built on a block device. The file system records not only file paths, but also blocks that form a file, and blocks that record directory/subdirectory information. Different file systems have different organizational structures. For ease of management, a block device such as a hard disk may generally be divided into a plurality of logical block devices, namely, hard disk partitions (Partitions). Conversely, a capacity and performance of a single medium are limited. A plurality of physical block devices may be combined into one logical block device by using some technical means, for example, various levels of redundant arrays of independent disks (redundant arrays of independent disks, RAIDs) and just a bundle of disks (Just a Bundle Of Disks, JBOD). The file system may alternatively be built on these logical block devices. In any case, an application on a host does not need to consider a specific location of a to-be-accessed file on an underlying block device, and only needs to send a file name/identifier (identifier, ID) of the file to the file system. The file system obtains a file path through query based on the file name/ID.

A common file access protocol is an NFS, a common internet of file system (Common Internet of File System, CIFS), a server message block (Server Message Block, SMB) protocol, or the like. This is not limited in this embodiment.

For example, a plurality of policies may be configured for file-level tiered storage. For example, various properties such as an associated application program, a directory, a user, a group, an invoking manner, a size, and an access frequency of a file are used as a classification condition and a trigger condition, and migration is performed by using any volume or directory as a migration target. In block-level tiered storage, the entire LUN or some blocks in the LUN are generally migrated based on an access frequency of the entire LUN or a data block (block) or some data blocks in the LUN.

Another possible storage structure is as follows. As shown in (a storage structure 2 in) FIG. 2, a file system may use a tree storage structure (or referred to as a tree data structure, a tree index structure, or the like) that supports offloading, to resolve a problem that a conventional dentry table does not support offloading and cannot use heterogeneous computing power to offload access. For example, the file system stores an intermediate node (index node) and a leaf node (leaf node) of a complete tree. The leaf node stores dentry metadata.

In (the storage structure 2 shown in) FIG. 2, an index node 0 includes a plurality of other index nodes, for example, an index node 1 to an index node 3. Each index node only includes a key (key) and does not include data content. In some optional cases, keys of index nodes are arranged in an ascending order. For a key of a specified index node, keys of all index nodes located in a left subtree of the specified index node are less than the key of the specified index node (for example, a key of the index node 1 is less than a key of the index node 2). Keys of all index nodes in a right subtree of the specified index node are greater than or equal to the key of the specified index node (for example, a key of the index node 3 is less than the key of the index node 2).

Each leaf node may include one or more storage partitions (partitions for short), and each partition may include one segment of consecutive address space. For example, a leaf node 1 includes a partition 1 to a partition m, and a leaf node includes a partition 1 to a partition k.

In this embodiment, a data access device may directly calculate an address of a to-be-accessed leaf node by using a cached index node, then directly read the leaf node of the tree from a storage end in a one-sided read manner, and parse the leaf node to obtain target dentry metadata.

The tree storage structure uses a large-leaf design, so that fewer leaf nodes (leaves for short below) are used for storage in a case of equal records, and corresponding internal index nodes of the tree are also fewer. This means that internal index nodes, of the tree, cached on a client or a smart network interface card side require fewer internal memory resources, or more internal index nodes (for example, the index node 0 to the index node 3 in FIG. 2) of the tree can be cached with same resources. This improves cache efficiency and finally improves query performance. All or most records may be directly calculated by using the cached index node to obtain an address of a leaf, of a target record, stored on a server, and then the record in the leaf node is directly read through one-sided DMA.

A large leaf uses a partition design internally to improve one-sided read performance. In an optional example, a size of each index node (inode nodesize) is 8 kilobytes (kilo bytes, KB), a size of each leaf node is 1 megabytes (million bytes, MB), and a storage capacity of each partition in the leaf node is 16 KB. For example, a 1 MB leaf is internally divided into 64 16 KB partitions. A leaf partition corresponding to a target key may be calculated by using an intermediate index node, and when content of the leaf node is read, only a single 16 KB target partition is read. This is because the one-sided read performance is related to a size of read content. Direct reading of the large leaf causes a significant decrease in the one-sided read performance, while reading of a single small leaf partition can ensure high one-sided read performance.

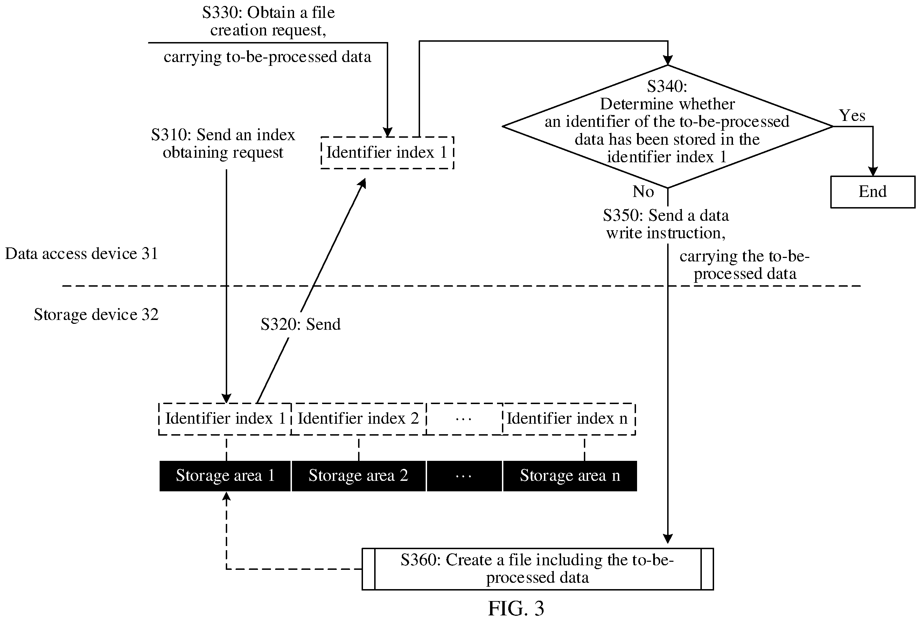

With reference to the data access system shown in FIG. 1 and the storage structure 2 of the file storage system 200 shown in FIG. 2, the following describes in detail a file creation method provided in this application. FIG. 3 is a schematic flowchart 1 of a file creation method according to this application.

The file creation method shown in FIG. 3 may be applied to the data access system shown in FIG. 1. A data access device 31 may be configured to perform a function of the data access device 100 in FIG. 1. A storage device 32 may be configured to implement a function of the storage device 120 in FIG. 1. For hardware implementation of the data access device 31 and the storage device 32, refer to the foregoing descriptions in FIG. 1 and FIG. 2. Details are not described herein again.

Refer to FIG. 3. The file creation method shown in FIG. 3 includes the following steps S310 to S360.

S310: The data access device 31 sends an index obtaining request to the storage device 32.

Corresponding to S310, the storage device 32 receives the index obtaining request sent by the data access device 31.

The index obtaining request carries an address of a first storage area to be requested. The first storage area is one of a plurality of storage areas included in the storage device 32, for example, any one of a storage area 1 to a storage area n, and n is a positive integer.

In this embodiment, each of the plurality of storage areas corresponds to one segment of consecutive address space included in one leaf node of a tree storage structure in the storage device 32. For descriptions of each leaf node of the tree storage structure, refer to the related content in FIG. 2. Details are not described herein again.

For example, one storage area includes all address space in one leaf node, for example, address space included in the leaf node 1 or address space included in the leaf node 6 in FIG. 2.

For another example, one storage area includes a part of address space in one leaf node. The part of address space may be address space of one partition in the leaf node, or may be address space of a plurality of consecutive partitions in the leaf node. Example descriptions are provided with reference to (the storage structure 2 in) FIG. 2. The plurality of consecutive partitions may be a partition 1 and a partition 2, or a partition 2 to a partition i (where i is an integer greater than 2 and less than k) in the leaf node 6. This is not limited in this application.

The foregoing two examples are merely possible implementations of the storage area provided in this embodiment, and should not be understood as a limitation on this application.

In this embodiment, the data access device 31 may only obtain index information of one or a few storage areas of the plurality of storage areas, so that the data access device 31 does not need to obtain index information of a large amount of data. This reduces an amount of data to be transmitted between the data access device 31 and the storage device 32, and reduces an amount of data to be stored in a memory of the data access device 31, that is, reduces a storage resource of the data access device 31 to be occupied by the index information.

S320: The storage device 32 sends an identifier index (an identifier index 1) of the first storage area (the storage area 1) to the data access device 31 in response to the index obtaining request.

The identifier index of the first storage area includes an identifier of data that has been stored in the first storage area.

The first storage area may be one of the plurality of storage areas included in the storage device 32, for example, the storage area 1. For hardware implementation of the plurality of storage areas, refer to the descriptions in FIG. 1. Example descriptions are provided with reference to FIG. 2. The storage area 1 may include one or more partitions in one leaf node. For details, refer to the descriptions in S310. Details are not described herein again.

The identifier of the data that has been stored in the storage area 1 may refer to a file name (file name) of a file including the data that has been stored.

Alternatively, in an application scenario of creating massive small files, the identifier of the data that has been stored in the storage area 1 may be dentry metadata. The dentry metadata is stored in a dentry table, and the dentry metadata is a pointer of data that has been stored in the storage device 32.

In the following, the storage area 1 may be referred to as the first storage area, the storage area 2 may be referred to as a second storage area, and the storage area n may be referred to as an n^{th} storage area. Details are not described again subsequently. The foregoing is merely an example provided in this embodiment, and should not be understood as a limitation on this application.

S330: The data access device 31 obtains a file creation request.

The file creation request (query file req) carries an identifier of to-be-processed data. For content of the identifier, refer to the descriptions in S320. Details are not described herein again. The file creation request indicates to write the to-be-processed data into the storage device 32.

In a possible example, the file creation request is a request generated by the data access device 31 based on a running service.

In another possible example, the file creation request is a request sent by another client (client) or a smart network interface card (SNIC) to the data access device 31. Corresponding to this case, S330 includes: The data access device 31 receives the file creation request.

The foregoing two examples are merely possible manners of obtaining the file creation request provided in this embodiment, and should not be understood as a limitation on this application.

S340: The data access device 31 determines whether the identifier of the to-be-processed data is stored in an identifier index cached in the data access device 31.

The identifier index includes an identifier of the data that has been stored in the storage device 32.

In an optional example, the identifier index includes keys (identifiers) stored in all index nodes in the storage device 32.

In another optional example, the identifier index includes keys (identifiers) stored in some index nodes in the storage device 32. For example, the identifier index only includes a key stored in an index node in one storage area or a few storage areas in the storage device 32, for example, a key stored in the foregoing storage area 1. The key indicates a file stored in one segment of consecutive address space included in one leaf node 1 in the storage device 32.

For a process in which the data access device 31 caches the identifier index, S310 and S320 are merely examples provided in this embodiment, and should not be understood as a limitation on this application. The following embodiment further provides another possible implementation. Details are not described herein again.

If the identifier of the to-be-processed data is not stored in the identifier index, the data access device 31 performs S350. If the identifier of the to-be-processed data has been stored in the identifier index, the data access device 31 determines that the storage device 32 has stored a file including the to-be-processed data, and ends the file creation process.

S350: The data access device 31 sends a data write instruction to the storage device 32.

The data write instruction carries the to-be-processed data, and the data write instruction instructs the storage device 32 to create a file including the to-be-processed data.

Corresponding to the instruction sending process in S350, the storage device 32 receives the data write instruction sent by the data access device 31.

S360: The storage device 32 creates, in response to the data write instruction, the file including the to-be-processed data.

In an optional implementation, the data write instruction further carries a target address of the to-be-processed data, and the storage area 1 includes storage space corresponding to the target address. For example, S360 includes: The storage device 32 creates, in the first storage area (the storage area 1), the file including the to-be-processed data. That is, the storage device 32 stores the created file in the storage area 1.

In this embodiment, a data identifier query process is offloaded from the storage device 32 to the data access device 31 (for example, a user end or a smart network interface card), so that the data identifier query process does not consume much computing power of the storage device 32. This helps reduce data query duration in the file creation process, to improve efficiency of file creation. As described in the content in the foregoing embodiment, the data access device 31 caches the identifier index, and the identifier index includes the identifier of the data that has been stored in the storage device 32. In the file creation process, the data access device 31 may query, based on the identifier index, whether the identifier of the data is stored in the storage device 32. The data identifier query process is offloaded from the storage device 32 in common practice to the data access device 31, in other words, the data access device 31 provides computing power required in the data identifier query process, so that the data identifier query process does not consume much computing power of the storage device 32. This helps reduce the data query duration in the file creation process, to improve the efficiency of file creation.

When the foregoing data access device is a pluggable smart network interface card, because the smart network interface card has a computing capability, to release computing power of a CPU of a client to which the smart network interface card belongs, the smart network interface card offloads, to a programmable hardware chip for execution, a data processing function that is in a network, security, and storage and that is not suitable for the CPU. This reduces CPU consumption of the client, so that the client can run a key application program and an operating system more effectively, to optimize service data processing efficiency.

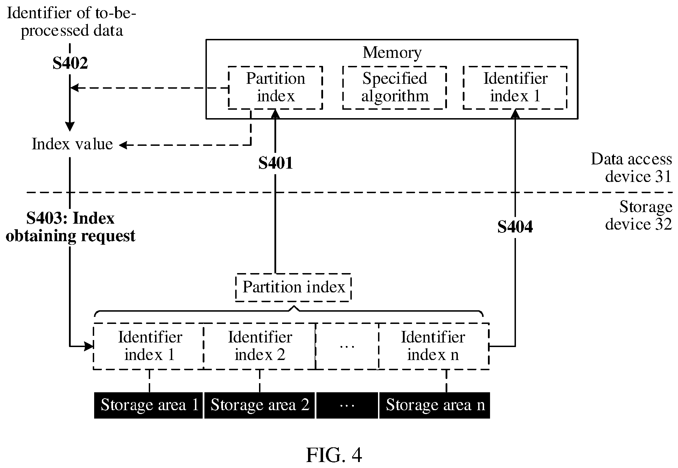

It should be noted that the foregoing identifier index obtaining process is merely a possible implementation provided in this embodiment. For the foregoing identifier index obtaining process, the following further provides another possible implementation. FIG. 4 is a schematic flowchart 2 of a file creation method according to this application. For an execution body of the file creation method, refer to the descriptions in FIG. 3. Details are not described herein again. A data access device includes a memory. The memory can read and write data at a high speed at any time, and serves as a temporary data memory of an operating system or another running program. For example, the memory may be a DRAM, an SRAM, or an SCM.

Before the foregoing S320, the file creation method provided in this embodiment includes steps S401 to S404.

S401: The data access device 31 obtains a partition index of a storage device 32.

The storage device 32 includes a plurality of storage areas, and identifiers of data stored in different storage areas are different.

The partition index includes an index value range corresponding to each of the plurality of storage areas, and different index values in the index value range correspond to identifiers of different data. The index value herein may be a value obtained by calculating the identifier of the data based on a specified algorithm. In some optional examples, a data amount of the index value is less than a data amount of the identifier, so that the partition index occupies fewer storage resources, and storage space required for caching the partition index by the data access device 31 is reduced.

In an optional implementation, the storage device 32 periodically sends the partition index to each data access device. For example, the storage device 32 sends the partition index to the data access device 31. In this way, each data access device may quickly determine a file storage status of each storage area in the storage device 32 based on the partition index, to avoid repeated negotiation between the data access device and the storage device. This improves efficiency of performing a file creation process by the data access device and the storage device.

In another optional implementation, the data access device 31 requests the partition index from the storage device 32 based on a service requirement of the data access device 31. For example, the data access device 31 sends, to the storage device 32, a request for obtaining the partition index, and the storage device 32 sends the partition index to the data access device 31 in response to the request. In this way, when there are a large quantity of data access devices communicating with the storage device 32, the storage device 32 does not need to consume a large quantity of broadcast resources to synchronize the partition index in the storage device 32, to reduce network resources (for example, data transmission bandwidth) of the storage device 32 and computing power consumption of a processor. This helps improve efficiency of executing each data access service (for example, file creation, data reading, or garbage collection) by the storage device 32.

The foregoing two optional implementations are merely examples provided in this embodiment, and should not be understood as a limitation on this application. In some examples, a synchronization manner of the partition index between the data access device and the storage device may alternatively be in another form. For example, the storage device caches the partition index in a shared memory that can be simultaneously read by a plurality of data access devices, and each data access device queries the partition index from the shared memory in response to a received file creation request.

S402: The data access device 31 processes an identifier of to-be-processed data based on the specified algorithm, to obtain an index value corresponding to the identifier of the to-be-processed data.

The specified algorithm includes one or a combination of a hash (hash) algorithm and a model-based key-value mapping algorithm.

For example, the specified algorithm includes the hash algorithm. The hash algorithm is used to convert an input of any length into an output of a fixed length (also referred to as pre-mapping pre-image). The output is a hash value (hash value). An operation process of the hash algorithm is contraction mapping.

For another example, the specified algorithm includes the model-based key-value mapping algorithm. For example, the model may be a neural network model implemented based on a deep neural network (deep neural network, DNN) or a convolutional neural network (convolutional neural network, CNN). The DNN is also referred to as a multi-layer neural network, and may be understood as a neural network having a plurality of hidden layers. There is no special measurement standard for "a plurality of" herein. The CNN is a deep neural network with a convolutional structure. For more content of the DNN and the CNN, refer to descriptions of a common technology. Details are not described herein.

For still another example, the specified algorithm includes the hash algorithm and the model-based key-value mapping algorithm.

The foregoing examples are merely possible implementations of the specified algorithm provided in this embodiment, and should not be understood as a limitation on this application. Another algorithm that can be used to determine a unique index value based on an identifier of data may also be included in the specified algorithm.

S403: The data access device 31 queries the partition index based on the index value, determines a target storage area that is in the plurality of storage areas and that matches the to-be-processed data, and sends an index obtaining request to the storage device 32.

The index obtaining request indicates the storage device 32 to send, to the data access device 31, an identifier of data that has been stored in the target storage area. For example, the target storage area may be a storage area 1. For more content of the index obtaining request, refer to the content in S310. Details are not described herein again.

For example, the partition index includes content in the following Table 1. Table 1 is a possible implementation of the partition index provided in this embodiment.

**Table 1**

| | Index value range-minimum value | Index value range-maximum value |
|---|---|---|
| Storage partition 1 | 0 | 9 |
| Storage partition 2 | 10 | 19 |
| ... | ... | ... |
| Storage partition n | (n-1)×10 | (n-1)×10+9 |

An index value range included in the storage partition 1 is 0 to 9, an index value range included in the storage partition 2 is 10 to 19, and an index value range included in the storage partition n is (n-1)×10 to (n-1)×10+9. That is, an index value range corresponding to a single storage partition includes 10 index values, and each storage partition can correspondingly store 10 files. Certainly, in the partition index, each storage area may alternatively correspond to a larger or smaller index value range, in other words, each storage partition may alternatively be used to store more or fewer files. This is not limited in this application.

S404: The data access device 31 receives an identifier index sent by the storage device 32 based on the index obtaining request.

The identifier index includes the identifier of the data that has been stored in the target storage area. For example, the identifier index is an identifier index 1. For more content of the identifier index, refer to the foregoing descriptions in S330. Details are not described herein again.

In this application, the data access device may only need to cache an identifier index of one or a few storage areas in the storage device 32, so that a data transmission delay of the identifier index between the data access device 31 and the storage device 32 is low, and storage space that needs to be occupied by the identifier index in the data access device 31 is small. This helps further reduce data query duration in a file creation process, to improve efficiency of file creation.

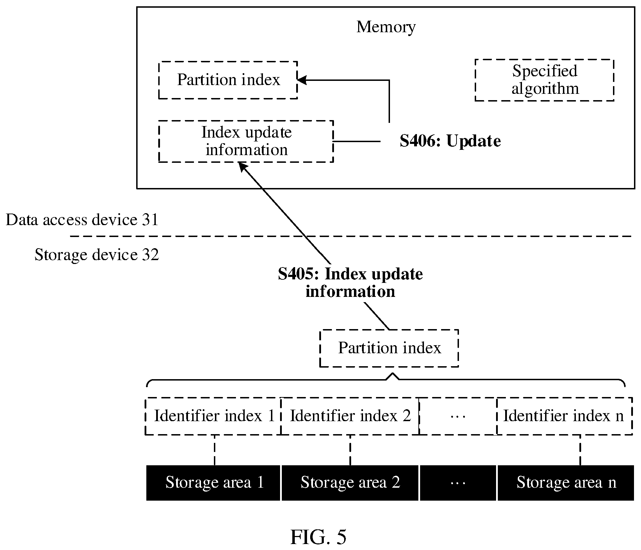

Optionally, based on the foregoing FIG. 3 and FIG. 4, for content of the partition index, this application further provides an optional implementation. FIG. 5 is a schematic flowchart 3 of a file creation method according to this application. After the foregoing S404, the file creation method provided in this embodiment further includes the following S405 and S406.

S405: A data access device 31 obtains index update information of a storage device 32.

The index update information indicates a change status of a partition index in the storage device 32.

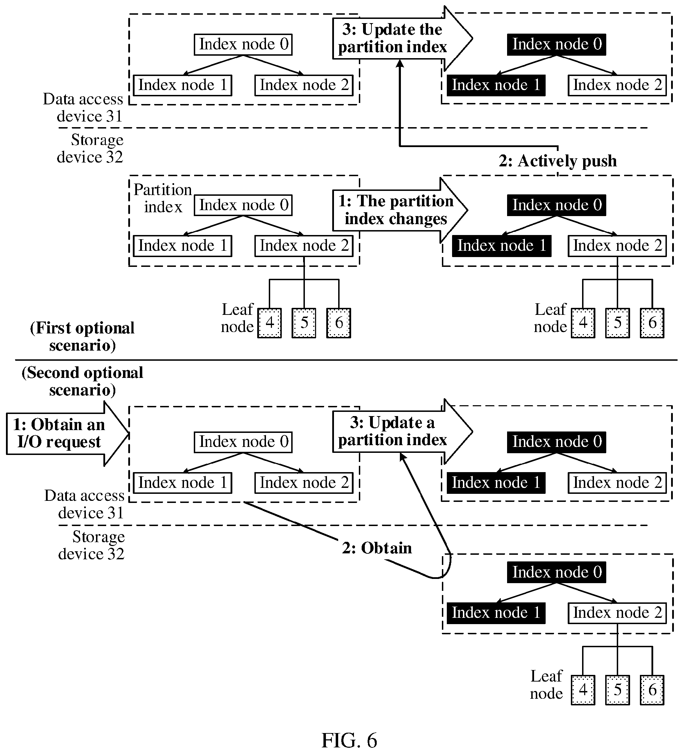

For a process in which the data access device 31 obtains the index update information, the following uses an example in which one storage area corresponds to one leaf node, an index value range of each storage area, and an index node to which the leaf node belongs, and the partition index includes all index nodes in the storage device 32. With reference to FIG. 6, two possible scenarios are provided. FIG. 6 is a diagram of two types of index update according to this application.

In a first optional scenario, if a quantity of data access devices communicating with a storage device 32 is small, the storage device 32 may use an active push manner. To be specific: 1: A partition index in the storage device 32 changes. 2: The storage device 32 actively sends an updated partition index or index update information to each data access device. Correspondingly, the data access device receives the partition index or the index update information sent by the storage device. 3: The data access device updates the partition index based on the index update information. In this scenario, the storage device synchronizes and updates the partition index cached by each data access device in a manner of broadcasting the partition index to one or more data access devices. Each data access device may obtain a latest partition index within a short period after the partition index in the storage device changes, to avoid an error in a subsequent file creation process, for example, avoid repeatedly creating a same file. This helps improve accuracy of file creation while ensuring timeliness of updating the partition index.

In a second optional scenario, if a quantity of data access devices communicating with a storage device 32 is large, a manner in which the data access devices actively perform synchronization may be used. To be specific: 1: The data access device triggers a partition index synchronization process periodically or by using a policy such as a statistics index cache hit rate (or miss rate). For example, when receiving an input/output (input/output, I/O) request, the data access device sends an index update request to the storage device 32. 2: Correspondingly, the storage device 32 sends a partition index of the storage device 32 to the data access device in response to the index update request. 3: Therefore, the data access device receives the partition index and updates an old partition index. In this scenario, each data access device obtains the partition index in the storage device as required, so that only a data access device really having I/O access in a plurality of data access devices synchronizes and caches the partition index, and a data access device having no I/O access does not cache the partition index. This reduces a waste of storage resources of the data access device having no I/O access, and avoids broadcast overheads caused by pushing the partition index by the storage device to a large quantity of data access devices, to improve data management performance inside the storage device.

In the foregoing two scenarios, the quantity of data access devices may be set based on a use requirement of a user or a performance requirement of a data access system. For example, that the quantity of data access devices is greater than or equal to a quantity threshold means that the quantity is large, and that the quantity of data access devices is less than the quantity threshold means that the quantity is small. The quantity threshold may be 100, 1000, or another possible value. This is not limited in this application.

S406: The data access device 31 updates the partition index based on the index update information.

In a possible example, if the index update information includes all content of the updated partition index, the data access device 31 caches the index update information as an updated partition index of the storage device 32 in a memory of the data access device 31, and deletes the old partition index stored in the memory.

In another possible example, if the index update information includes a part of content of the updated partition index, the data access device 31 overwrites, into the old partition index, content that is in the index update information and that is different from the content in the old partition index, to obtain the updated partition index.

The foregoing two possible examples are possible implementations of a manner of updating the partition index provided in this embodiment, and should not be understood as a limitation on this application.

In this application, the data access device may update the partition index based on a change status of a plurality of storage areas in the storage device, so that the data access device can obtain an identifier index based on a latest partition index in a file creation query process. This avoids a problem that the storage device creates a duplicate file because the storage device has stored data with a same identifier, and improves accuracy of file creation.

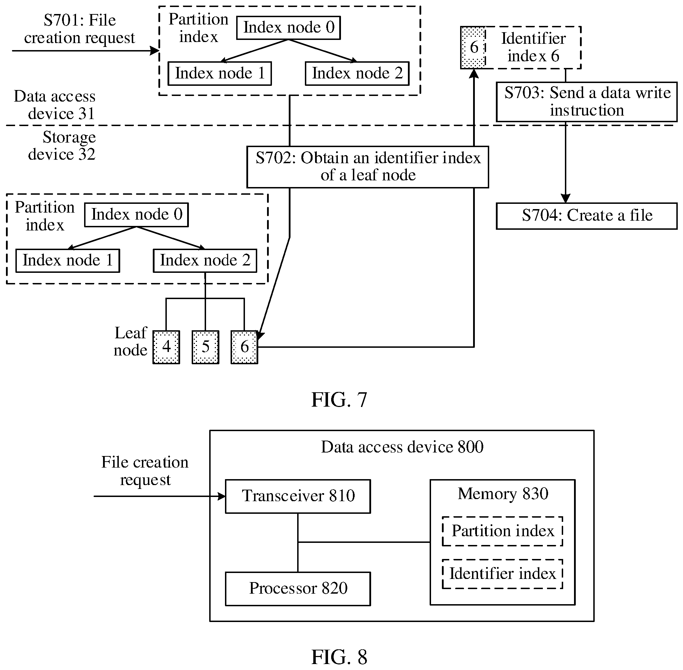

The following describes the file creation method provided in embodiments of this application by using an example in which an identifier of data is a file name (filename), an identifier index is dentry metadata, a storage area corresponds to a leaf node, and a partition index corresponds to an index node. FIG. 7 is a schematic flowchart 4 of a file creation method according to this application. The file creation method provided in this embodiment includes the following steps S701 to S704.

S701: A data access device 31 obtains a file creation request.

For more detailed descriptions of S701, refer to the content in S330. Details are not described herein again.

S702: The data access device 31 queries a cached partition index based on a file name (filename1) of data in the file creation request, determines a target leaf node, and performs one-sided reading on an identifier index of the target leaf node in a storage device 32.

For example, an input of a query operation performed by the data access device 31 is filename1, and filename1 is used as a key to query an address of the target leaf node in the cached partition index (for example, a tree index node).

For example, the target leaf node is a leaf node 6, and the identifier index is an identifier index 6 of the leaf node 6. The identifier index 6 includes a file name (filename) of a file that has been stored in the leaf node 6. In the identifier index 6, each file name exists in a form of dentry metadata. The dentry metadata includes a plurality of KV pairs, for example, filename->inode ID. inode ID is an ID of an index node where a leaf node to which filename belongs is located, for example, an index node 2.

After the data access device 31 determines the identifier index 6 through query, and determines that the file name of the data in the file creation request is not stored in the identifier index 6, S703 is performed. A query manner may be a manner such as binary search or traversal. A traversal query is used as an example. The data access device 31 compares the identifier index 6 (dentry metadata) one by one to determine whether a KV pair including filename1 exists. If the KV pair including filename1 does not exist, S703 is performed.

S703: The data access device 31 sends, to the storage device 32, a data write instruction carrying the data in the file creation request.

S704: The storage device 32 creates a file in response to the data write instruction.

In addition, the storage device 32 further creates a KV pair including filename1, and writes the newly created KV pair into the identifier index 6 of the storage device 32. Correspondingly, the storage device 32 further updates the partition index based on an identifier index 6 in which the new KV pair has been written.

For an index update process between the data access device and the storage device, refer to the foregoing processes in FIG. 4 to FIG. 6. Details are not described herein again.

In the accompanying drawings corresponding to the foregoing embodiments, only one data access device is shown. However, in some optional implementations, a single storage device may be accessed by a plurality of different data access devices, and can still implement the file creation method provided in this application. Details are not described herein again.

It may be understood that, to implement the functions in the foregoing embodiments, the data access device and the storage device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The foregoing describes in detail the file creation method provided in this embodiment with reference to the accompanying drawings. The following describes a data access device provided in this embodiment with reference to FIG. 8.

FIG. 8 is a diagram of a structure of a data access device according to this application. The data access device may be configured to implement a function of the data access device in the foregoing method embodiments. Therefore, beneficial effects of the foregoing method embodiments can also be implemented. In this embodiment, the data access device may be the data access device 100 shown in FIG. 1, may be the data access device 31 in the subsequent embodiment, or may be a module (such as a chip) used in the data access device.

As shown in FIG. 8, a data access device 800 may include a processor 820. Optionally, the data access device 800 may further include a memory 830 and/or a transceiver 810. The processor 820 is coupled to the memory 830 and the transceiver 810, for example, may be connected through a communication bus. The communication bus may include but is not limited to: a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like.

The following describes each component of the data access device 800 in detail with reference to FIG. 8.

The processor 820 is a control center of the data access device 800, and may be one processor, or may be a general term of a plurality of processing elements. For example, the processor 820 may be one or more CPUs, or an application-specific integrated circuit (application-specific integrated circuit, ASIC), or may be configured as one or more integrated circuits implementing this embodiment of this application, for example, one or more digital signal processors (digital signal processors, DSPs) or one or more field programmable gate arrays (field programmable gate arrays, FPGAs).

Optionally, the processor 820 may perform various functions of the data access device 800 by running or executing a software program stored in the memory 830 and invoking data stored in the memory 830. During specific implementation, in an embodiment, the processor 820 may include one or more CPUs.

Optionally, the data access device 800 may alternatively include a plurality of processors. Each of the processors may be a single-core processor (single-CPU) or may be a multi-core processor (multi-CPU). The processor herein may be one or more devices, circuits, and/or processing cores configured to process data (for example, computer program instructions).

The memory 830 is configured to store the software program for performing the solutions in this application, and the processor 820 controls execution of the software program. For a specific implementation, refer to the foregoing method embodiments. Details are not described herein again. For example, the memory 830 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that is accessible by a computer, but is not limited thereto. The memory 830 may be integrated with the processor 820, or may exist independently, and is coupled to the processor 820 through an interface circuit (not shown in FIG. 8) of the data access device 800. This is not specifically limited in this embodiment of this application.

The transceiver 810 is configured to communicate with another device. For example, the data access device 800 is a user end (for example, a client) or an application server, and the transceiver 810 may be configured to communicate with a storage device, or communicate with another data access device. For another example, the data access device 800 is a smart network interface card (SNIC), and the transceiver 810 may be configured to communicate with a storage device, or communicate with another smart network interface card. For still another example, the data access device 800 is a multi-core chip, and the transceiver 810 may be configured to communicate with another multi-core chip.

Optionally, the transceiver 810 may include a receiver and a transmitter (not separately shown in FIG. 8). The receiver is configured to implement a receiving function, and the transmitter is configured to implement a sending function. Optionally, the transceiver 810 may be integrated with the processor 820, or may exist independently, and is coupled to the processor 820 through an interface circuit (not shown in FIG. 8) of the data access device 800. This is not specifically limited in this embodiment of this application.

In this embodiment, the transceiver 810 is configured to obtain a file creation request, where the file creation request indicates to write to-be-processed data into a storage device, and the file creation request carries an identifier of the to-be-processed data.

The processor 820 is configured to determine whether the identifier of the to-be-processed data is stored in an identifier index cached in the data access device, where the identifier index includes an identifier of data that has been stored in the storage device.

The transceiver 810 is further configured to: if the identifier of the to-be-processed data is not stored in the identifier index, send a data write instruction to the storage device, where the data write instruction carries the to-be-processed data, and the data write instruction instructs the storage device to create a file including the to-be-processed data.

The memory 830 is configured to store information such as a partition index and an identifier index. For more content of the partition index and the identifier index, refer to the descriptions in the foregoing embodiments. Details are not described herein again.

The method steps in embodiments may be implemented in a hardware manner, or may be implemented by executing software instructions by the processor. The software instructions include corresponding software modules. The software modules may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may exist in a network device or a terminal device as discrete components.

This application further provides a chip system. The chip system includes a processor, configured to implement a function of the data processing unit in the foregoing method. In a possible design, the chip system further includes a memory, configured to store program instructions and/or data. The chip system may include a chip, or may include a chip and another discrete component.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A file creation method, wherein the method is performed by a data access device, and the method comprises:
obtaining a file creation request, wherein the file creation request indicates to write to-be-processed data into a storage device, and the file creation request carries an identifier of the to-be-processed data;
determining whether the identifier of the to-be-processed data is stored in an identifier index cached in the data access device, wherein the identifier index comprises an identifier of data that has been stored in the storage device; and
if the identifier of the to-be-processed data is not stored in the identifier index, sending a data write instruction to the storage device, wherein the data write instruction carries the to-be-processed data, and the data write instruction instructs the storage device to create a file comprising the to-be-processed data.

2. The method according to claim 1, wherein the data access device comprises either or both of a user end and a smart network interface card that communicate with the storage device.

3. The method according to claim 1 or 2, wherein the storage device comprises a plurality of storage areas, and identifiers of data stored in different storage areas are different; the data access device further caches a partition index, wherein the partition index comprises an index value range corresponding to each of the plurality of storage areas; and
before a storage status of the identifier of the to-be-processed data is determined based on the identifier index cached in the data access device, the method further comprises:
processing the identifier of the to-be-processed data based on a specified algorithm to obtain an index value corresponding to the identifier of the to-be-processed data, wherein the specified algorithm comprises one or a combination of a hash algorithm and a model-based key-value mapping algorithm;
querying the partition index based on the index value, determining a target storage area that is in the plurality of storage areas and that matches the to-be-processed data, and sending an index obtaining request to the storage device, wherein the index obtaining request indicates the storage device to send, to the data access device, an identifier of data that has been stored in the target storage area; and
receiving the identifier index sent by the storage device based on the index obtaining request, wherein the identifier index comprises the identifier of the data that has been stored in the target storage area.

4. The method according to claim 3, wherein the data write instruction further carries a target address of the to-be-processed data, and the target storage area comprises storage space corresponding to the target address.

5. The method according to claim 3 or 4, wherein the method further comprises:
receiving index update information sent by the storage device, wherein the index update information indicates a change status of the partition index; and
updating the partition index based on the index update information.

6. A file creation method, wherein the method is performed by a storage device, and the method comprises:
receiving an index obtaining request sent by a data access device, wherein the index obtaining request carries an address of a first storage area to be requested, and the first storage area is one of a plurality of storage areas comprised in the storage device;
sending an identifier index of the first storage area to the data access device in response to the index obtaining request, wherein the identifier index of the first storage area comprises an identifier of data that has been stored in the first storage area;
receiving a data write instruction sent by the data access device, wherein the data write instruction carries to-be-processed data; and
creating, in response to the data write instruction, a file comprising the to-be-processed data.

7. The method according to claim 6, wherein the data write instruction further carries a target address of the to-be-processed data, and the first storage area comprises storage space corresponding to the target address; and
the creating, in response to the data write instruction, a file comprising the to-be-processed data comprises:
creating, in the first storage area, the file comprising the to-be-processed data.

8. The method according to claim 6 or 7, wherein each of the plurality of storage areas corresponds to one segment of consecutive address space comprised in one leaf node of a tree storage structure in the storage device.

9. The method according to any one of claims 6 to 8, wherein before the receiving an index obtaining request sent by a data access device, the method further comprises:
sending a partition index to the data access device, wherein the partition index comprises an index value range corresponding to each of the plurality of storage areas, and different index values in the index value range correspond to identifiers of different data.

10. A data access device, comprising:
a transceiver, configured to obtain a file creation request, wherein the file creation request indicates to write to-be-processed data into a storage device, and the file creation request carries an identifier of the to-be-processed data; and
a processor, configured to determine whether the identifier of the to-be-processed data is stored in an identifier index cached in the data access device, wherein the identifier index comprises an identifier of data that has been stored in the storage device, wherein
the transceiver is further configured to: if the identifier of the to-be-processed data is not stored in the identifier index, send a data write instruction to the storage device, wherein the data write instruction carries the to-be-processed data, and the data write instruction instructs the storage device to create a file comprising the to-be-processed data.

11. The data access device according to claim 10, wherein the data access device comprises either or both of a user end and a smart network interface card.

12. A storage device, comprising:
a memory, configured to provide a plurality of storage areas; and
a processor, configured to: receive an index obtaining request sent by a data access device, wherein the index obtaining request carries an address of a first storage area to be requested, and the first storage area is one of the plurality of storage areas comprised in the storage device; and perform, based on the index obtaining request, the method according to any one of claims 6 to 9.

13. A data access system, comprising:
one or more storage devices according to claim 12, configured to store data; and
one or more data access devices according to claim 10 or 11, configured to access the storage device.

14. A computer-readable storage medium, wherein the computer-readable storage medium stores computer software instructions, and when the computer software instructions are run on a computer, the computer performs the method according to any one of claims 1 to 9.

15. A computer program product, wherein when the computer program product runs on a computer, the computer performs the method according to any one of claims 1 to 9.
